# EUROPEAN PATENT APPLICATION

(11) **EP 1 020 807 A1**
(43) Date of publication of application: **19.07.2000**
(21) Application number: 97943163.2
(22) Date of filing: 08.10.1997
(51) Int. Cl.: G06F 17/60, G06F 17/50

(54) **A PRODUCT DESIGN PRODUCTION SYSTEM AND METHOD**

(30) Priority: 08.10.1996 JP 26744996
(71) Applicant: CITIZEN WATCH CO. LTD., Shinjuku-Ku Tokyo 163-04 (JP)
(72) Inventor: HARASAKI, Hiroyuki, Citizen Watch Co., Ltd., Shinjuku-ku Tokyo 163-04 (JP); KATO, Shiro, Citizen Watch Co., Ltd., Shinjuku-ku Tokyo 163-04 (JP); KUBO, Izumi, Citizen Watch Co., Ltd., Shinjuku-ku Tokyo 163-04 (JP); KAWASHIMA, Yuri, Citizen Watch Co., Ltd., Shinjuku-ku Tokyo 163-04 (JP); HORI, Akihiro, Citizen Watch Co., Ltd., Shinjuku-ku Tokyo 163-04 (JP); OZAKI, Masashi, Citizen Watch Co. Ltd. Tanashi Fac, Tanashi-shi Tokyo 188 88 (JP); SAKITA, Eiichi, Citizen Watch Co., Ltd., Shinjuku-ku Tokyo 163-04 (JP)
(74) Representative: Wilhelm, Hans-Herbert, Dr.-Ing.
(86) International application number: JP9703625
(87) International publication number: WO9815908

(57) **Abstract**

The present invention relates to an article design creating system. An article supplier (for example, a clock maker) provides parts digital information indicating article (for example, a watch) constituent parts of which can be provided from the article supplier to a consumer, and design software for combining the parts digital information or design basic information based on design software, through, for example, information communication network. The article supplier accepts article original design information created by the consumer by using the parts digital information and the design software and by combining the parts digital information. The article supplier produces the article based on the original design information sent from the consumer and provides completed article to the consumer.

## Description

### TECHNICAL FIELD

The present invention relates to an article design creating system and method of the same. In particular, it relates to a watch design creating system and method of the same and to an article supply system based on digital information processing technique in order to directly make an article, originally designed by a consumer himself based on his favorite design, by a clock maker.

In the present invention, when the consumer requests service from the clock maker as an article supplier through an information communication means, such as the internet, magazines, etc., the clock maker sends design information in which design specifications are recorded through an information communication means or using a storage medium. The consumer reads necessary data from the design information and creates an original design information (i.e., a design specification) having his favorite design, and sends the original design information to the clock maker by utilizing the information communication means or by recording the design information on the storage medium, for example, a floppy disk. The clock maker produces a watch based on the design specification from the consumer, and provides the completed watch to the consumer.

### BACKGROUND ART

There is a known mail-order system in which a consumer selects his favorite article from a predetermined catalog, and orders it through a communication line.

Further, there is a known TV-order system in which a consumer selects his favorite article on the television display, and orders it through a communication line.

In these order sales system, there is a system in which the favorite design can be designated by the consumer from several kinds of designs of, for example, a dial-plate of the watch which was previously prepared by the clock maker. Further, there is a particular order system in which designated characters can be printed either on the dial-plate or on a back lid of the watch case, if the consumer orders a large number of the watches.

However, in these order sales system, although some flexibility regarding the design, such as designation of the dial-plate, printing of characters, etc., are available to the consumer, this flexibility is insufficient to give a feeling of satisfaction to the consumer, i.e., creation of an originally-designed watch, of which there is only one in the world, to the consumer.

### DISCLOSURE OF THE INVENTION

The object of the present invention aims to be able to produce an originally-designed and full-scale watch in which a consumer directly accesses an article supplier (for example, a clock maker) through an information communication means, such as an information communication network, utilizes design software including design basic information provided by the clock maker, and executes the design of the watch on the display of a consumer's personal computer.

In the first aspect of the present invention, an article design creating system is characterized by comprising: means for providing parts digital information indicating article (for example, a watch) constituent parts, which can be provided from the article supplier (for example, the clock maker) to the consumer, and the design software (or the design basic information based on the design software) to combine parts digital information on the information communication means (for example, the information communication network); means for accepting an article originally-designed information created by combining the parts digital information, using the parts digital information and design software from the consumer to the article supplier; and means for producing the article in the article supplier based on the originally-designed information received from the consumer.

### In the second aspect of the present invention, an article design creating method is characterized by comprising: a process for providing parts digital information indicating article (for example, a watch) constituent parts, which can be provided from the article supplier (for example, the clock maker) to the consumer, and the design software (or the design basic information based on the design software) to combine the parts digital information on the information communication means (for example, the information communication network); a process for accepting an article originally-designed information created by combining parts digital information, using the parts digital information and design software from the consumer to the article supplier; and a process for producing the article in the article supplier based on the originally-designed information received from the consumer.

In the third aspect of the present invention, a computer readable storage medium recording a program to execute the following processes is characterized by comprising: a process for providing parts digital information indicating article (for example, a watch) constituent parts, which can be provided from the article supplier (for example, the clock maker) to the consumer, and the design software (or the design basic information based on the design software) to combine the part digital information on the information communication means (for example, the information communication network); a process for accepting an article originally-designed information created by combining parts digital information, using the parts digital information and design software from the consumer to the article supplier; and a process for producing the article in the article supplier based on the originally-designed information received from the consumer.

In the fourth aspect of the present invention, a computer readable storage medium recording a program to execute the following processes is characterized by comprising: a process for providing parts digital information indicating an article (for example, a watch) constituent parts to create an article (for example, a watch) to the consumer; a process for selecting parts digital information corresponding to the consumer's desired article design from the parts digital information in the consumer's side; and a process for recording parts digital information selected by the consumer on the predetermined storage medium.

### BRIEF DESCRIPTION OF THE DRAWINGS

Figure 1 is a flowchart of basic operation according to the present invention (No. 1).
Figure 2 is a flowchart of basic operation according to the present invention (No. 2).
Figure 3 is a basic flowchart at a consumer's operation according to the present invention.
Figure 4 shows steps of displaying a main menu.
Figure 5 shows steps of displaying an image check.
Figure 6 shows steps of selecting a sample (No1).
Figure 7 shows steps of selecting a sample (No2).
Figure 8 shows steps of selecting a sample (No3).
Figure 9 shows steps of displaying a holding image.
Figure 10 shows steps of preparing an order data.
Figure 11 shows steps of confirming color tone.
Figure 12 is a structural view of a system according to the present invention.
Figure 13 is an explanatory view of contents of a storage medium used in the present invention.
Figure 14 shows a display of the main menu image.
Figure 15 shows a display of the image check.
Figure 16 shows a display of a result of the image check.
Figure 17 shows a display of a sample selection image.
Figure 18 shows a display of a dial-plate when selecting the sample.
Figure 19 shows a display of a sight of dial-plates when selecting the sample.
Figure 20 shows a display of confirmation of the dial-plate when selecting the sample.
Figure 21 shows a display of the dial-plate when selecting the sample.
Figure 22 shows a display of a read of the dial-plate when selecting the sample.
Figure 23 shows a display of a time indicator.
Figure 24 shows a display of a message input image.
Figure 25 shows a display of hour and minute hands when selecting the sample.
Figure 26 shows a display of a watch case when selecting the sample.
Figure 27 shows a display of a wrist band made of urethane when selecting the sample.
Figure 28 shows a display of a wrist band made of leather when selecting the sample.
Figure 29 shows a display of a crown when selecting the sample.
Figure 30 shows a display of the holding image.
Figure 31 shows a display of a confirming image.
Figure 32 shows a display of preparing an order data.
Figure 33 shows a display of confirming ordered sum of money.
Figure 34 shows a display of selecting "HOLD" button.
Figure 35 shows a display of materials of the wrist band when selecting the sample.
Figure 36 shows a display of hands image when selecting the sample.

### BEST MODE OF CARRYING OUT THE INVENTION

Before explaning the embodiments according to the present invention, definitions of terms used in the present invention will be clarified below.

First, the "article supplier" includes not only a single supplier, but also a plurality of article suppliers. For example, when a trading company A provides software to a consumer, and when a maker B produces an article, the trading company A and the maker B correspond to the article suppliers. As another case, when the trading company A requests parts digital information to an agency company C, the agency company C is also included in the article supplier. Further, the maker B may include a plurality of makers B1, B2, B3, ...

Further, the "consumer" includes not only a single consumer, but also a plurality of consumers. For example, when a consumer A requests preparation of information of the article original design to an agency B, and when the consumer A orders the article based on the design of the agency B, the consumer A and the agency B are included in the consumer.

Still further, the "design basic information" is the information indicating a basic combination and mutual arrangement among the parts digital information determined in accordance with kinds of articles. The article supplier includes means for providing the design basic information based on the design software to the consumer. For example, in the case of the wrist watch, there is the basic information, i.e., two bands being coupled to the watch case, the hour and minutes hands being arranged on the front of the dial-plate, etc. Based on the design basic information, the consumer can create the article original design information so that it is easy to create the original design information for the consumer. Accordingly, it is possible to prevent an omission when selecting the article constituent parts. Further, when the article supplier prepares some custom samples, and when constituent parts of the custom samples are changed by the consumer to his favorite parts, the creation of the original design information by the consumer becomes easy and effective.

Further, the "article constituent parts" are various kinds of parts constituting the article, and the parts are determined based on kinds of the articles. For example, in the case of the wrist watch, the constituent parts are indicated by a watch case, a wrist band, a buckle, a dial-plate, hands, a crown, etc. The article constituent parts may be defined as either parts for determining an external appearance, or parts for determining function of the watch.

Further, regarding the "article", if it is an article in which a consumer can select constituent parts of that article, it is possible to apply the present invention to any articles. For example, the following parts, i.e., accessories, such as a dress, a necktie, etc.; ornaments, such as a necklace, a finger ring, etc.; a car; a motor bicycle; a furniture; etc., are included in the article. Further, it is possible to design room planning and internal ornaments in a house by the consumer as the original design. Further, it is possible to design audio equipment, such as a stereo, an amplifier, etc., by the consumer, as the original design. In the embodiment, an "article" is a watch as explained below.

Further, the "information communication means" includes all current communication means to communicate with the consumer, for example, an advertisement on a newspaper or magazine; an advertisement in a vehicle, such as a train, a bus, etc.; commercial scene in TV or radio broadcasting; a manual information transfer means using a mail, or a telephone; and the internet.

Still further, the "information communication network" includes all networks to communicate with the consumer, which is represented by the internet, a personal computer communication, etc.

Below, embodiments of the present invention will be explained in detail with reference to the drawings.

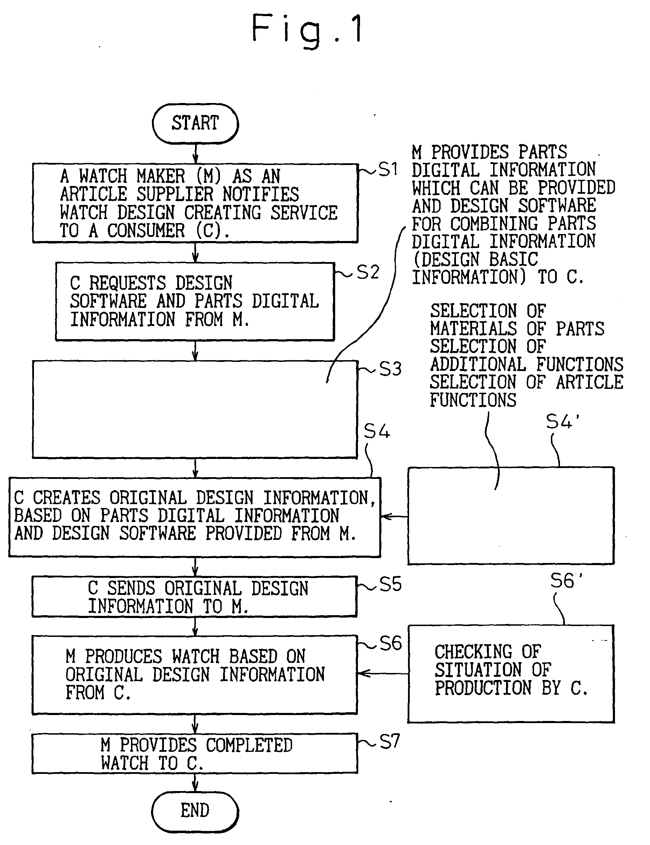

Figure 1 is a flowchart of basic operation according to the present invention (No. 1). This embodiment is in the case that an article supplier is a clock maker. That is, a consumer creates a watch having his favorite design. As explained in detail below, the clock maker provides the design basic information to design the watch design through the information communication network, and the consumer returns the original design information of the watch through the same network.

First, the clock maker (M) as the article supplier notifies a watch design creation service to the consumer (C) through the information communication network (for example, the internet (24H service) (step S1). The consumer who received the information requests the design software and the parts digital information through the internet, an E-mail, etc. (step S2).

Further, besides parts digital information which are provided from the clock maker, there are other parts digital information which are independently created by the consumer. In this case, a digital image taken by a digital camera, a digital image scanned from a photograph, etc., are included in the parts digital information.

Next, the clock maker provides parts digital information, which can be supplied from the clock maker to the consumer, and the design software (or the design basic information based on the design software) to combine these parts to the consumer through the network (step S3). The consumer who received the design software (or the design basic information based on the design software) utilizes the design software and the parts digital information, combines the parts digital information which are independently created by the consumer, and creates the original design information as the completed watch (step S4). At that time, the consumer selects materials of the article constituent parts, selects additional functions added to the article constituent parts, and selects functions of the article (step S4'). Further, the consumer sends the original design information to the clock maker through the network, and requests production of the watch (step S5).

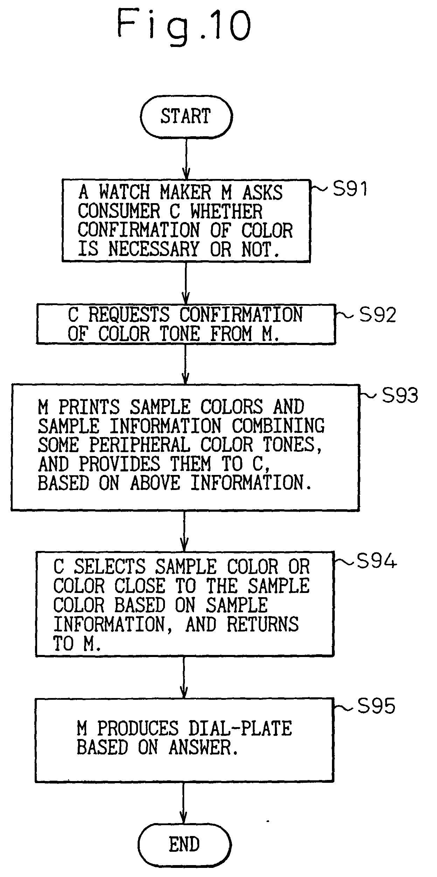

Next, the clock maker produces the watch in accordance with the original data recorded in the original design information which received from the consumer (step S6). In this case, the consumer may check situation of production at the clock maker through the network (step S6'). Further, the clock maker completes the watch and provides it to the consumer (step S7). In this case, as explained in Fig. 10, when the clock maker considers situation that the color tone of the dial-plate is slightly different between the image on the display and an actual color tone of the dial-plate, the clock maker confirms the color tone of the dial-plate to the consumer, if the consumer wishes to do.

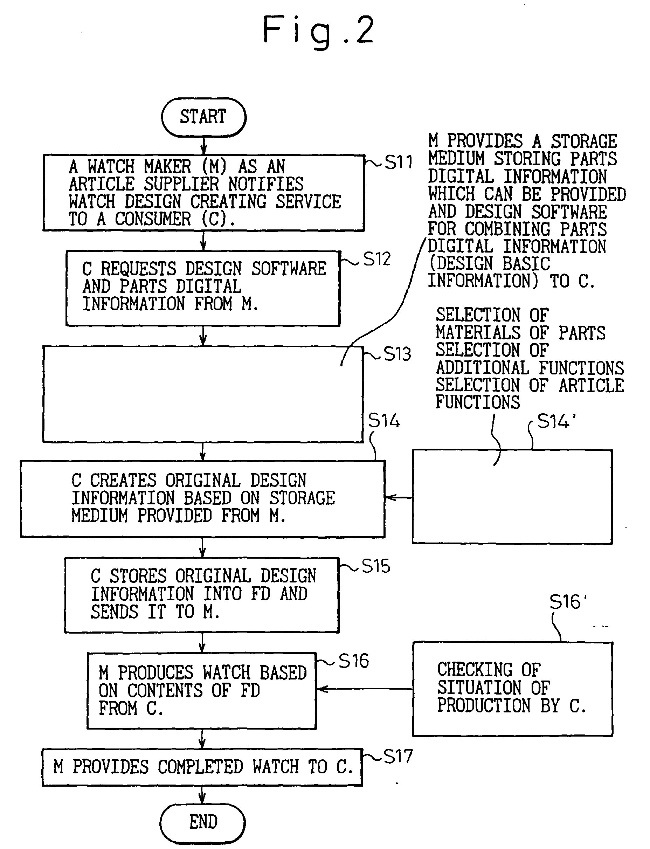

Figure 2 is a flowchart of basic operations according to the present invention (No. 2). In this embodiment, the clock maker temporarily stores the design basic information on the storage medium and provides it to the consumer. The consumer returns the original design information to the clock maker using the floppy disk (FD).

First, the clock maker (M) notifies the watch design creation service to the consumer (C) through the information communication network (for example, the internet (24H service) (step S11). The consumer who received the information requests the design software and the parts digital information through the internet, E-mail, a letter, etc. (step S12). Next, the clock maker sends the storage medium (for example, a CD-ROM) which stored parts digital information, which can supply from the clock maker, and the design software (or the design basic information based on the design software) to combine these parts to the consumer through the network (step S13).

The consumer who received the CD-ROM sets it in his personal computer. The consumer combines the parts digital information which were supplied by the clock maker, and the parts digital information which were independently created by the consumer if necessary (for example, a dial-plate on which an original message is written), and creates the original design information (step S14). At that time, the consumer selects materials of the article constituent parts, selects the additional functions added to the article constituent parts, and selects the functions of the article (step S14'). Further, the consumer sends the original design information to the clock maker through the network and requests production of the watch (step S15).

Next, the clock maker produces the watch in accordance with the original data recorded in the floppy disk which received from the consumer (step S16). In this case, the consumer may check situation of production at the clock maker through the internet. Further, the clock maker completes the watch and provides it to the consumer (step S17).

In this case, the consumer may checks current situation of production (below, production situation) at the clock maker for the ordered watch through the information communication network, for example, the internet (step S16'). Concretely, there is the following method. That is, the clock maker inputs situation of production of the wrist watches, which were ordered by the consumers, for each watch in a homepage of the internet. Each user's name and telephone number are attached in the production situation data in the homepage as keywords for search. Accordingly, the consumer accesses the homepage of the clock maker and can obtain the production situation data for the wrist watch which was ordered by himself by using his own name and telephone number. In this case, the following three steps are displayed on the screen as the production situation data, i.e., (1) The order of the wrist watch was received, (2) The ordered wrist watch is in production, and (3) The ordered wrist watch was sent to you. Further, if the above step (2) is divided into a plurality of steps and displayed on the screen, the consumer can know the exact production situation.

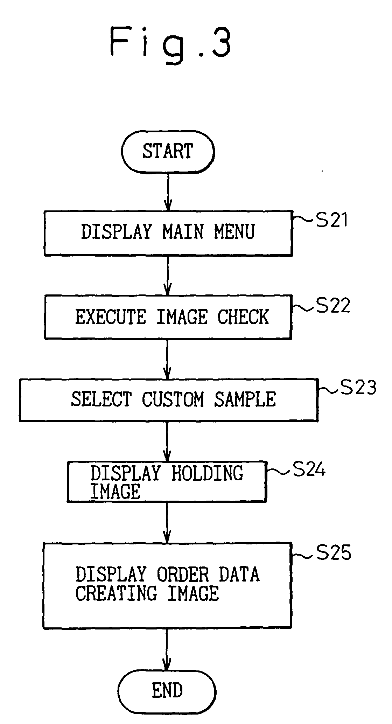

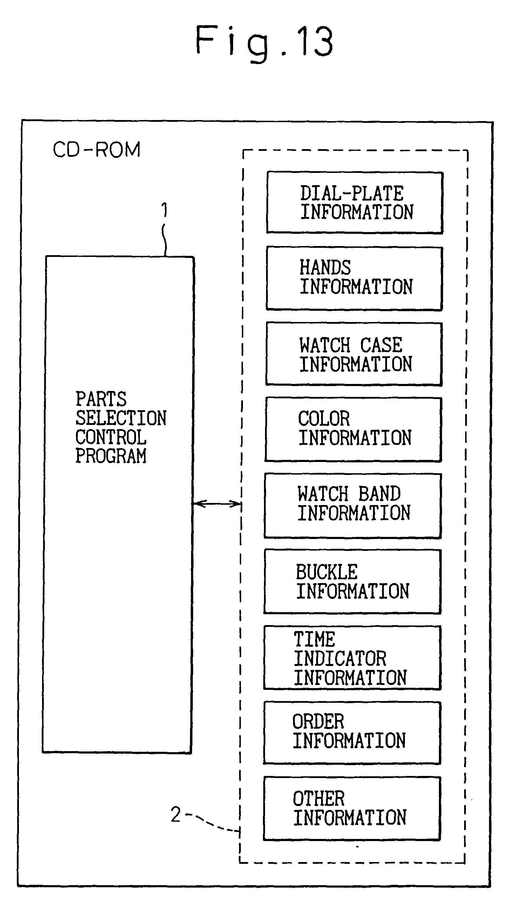

Figure 3 is a flowchart of basic operation at the consumer who received the storage medium from the clock maker. That is, this flowchart shows concretely the step S14. The following steps are executed based on a control program (see number 1 in Fig. 13) within the CD-ROM as the storage medium provided from the clock maker. As mentioned below, the CD-ROM records the following information (see number 9 in Fig. 13), i.e., dial-plate information, hour and minute hands information, watch case information, color information, wrist band information, buckle information, time-indicator information, order information, and other information (for example, message information), as the parts design information which can be selected by the consumer.

In this case, the order information includes the information relevant to the consumer himself, such as consumer's name, residence, telephone number, etc., and the order information regarding "which watch" and "how many watches" within several wrist watches which were originally-designed and held by the following means. The recorded name and telephone number are used as an address to check production situation of the wrist watch which was ordered by the consumer.

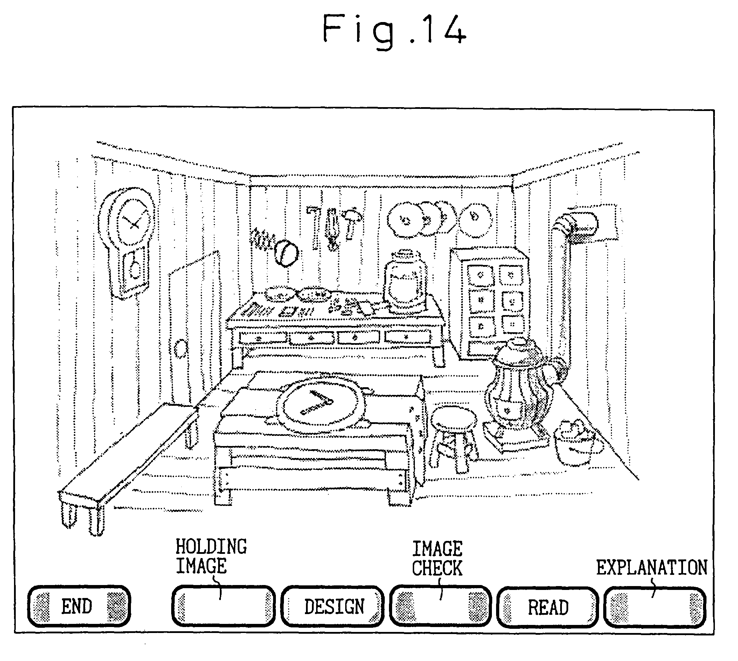

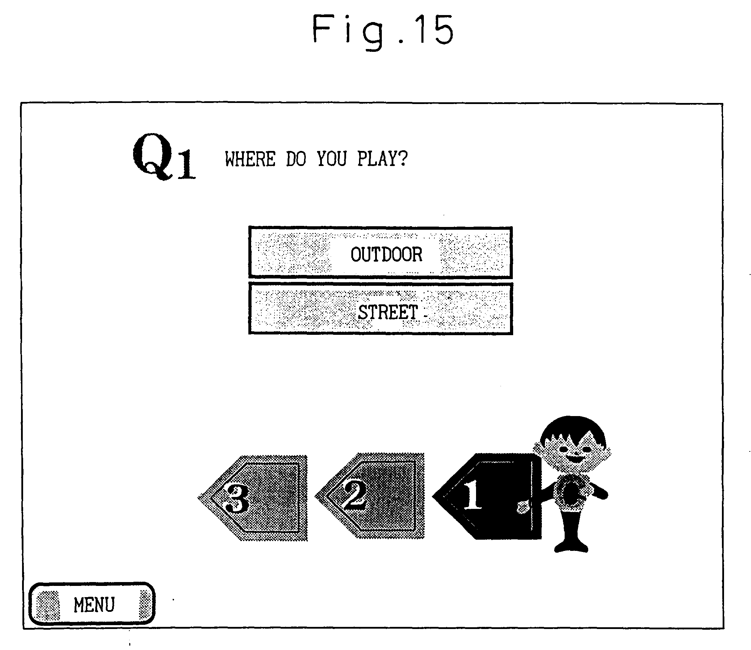

In Fig. 3, first, an image "TOKEI KOBOU" (i.e., a watch studio(room)) is displayed on the screen (see Fig. 14), and the main menu is displayed (step S21). Next, the image check is executed (step S22). In the image check, three questions are displayed. For example, when the question "Where do you play ?" is displayed, the consumer selects either "outdoor" or "street" (see Fig. 15).

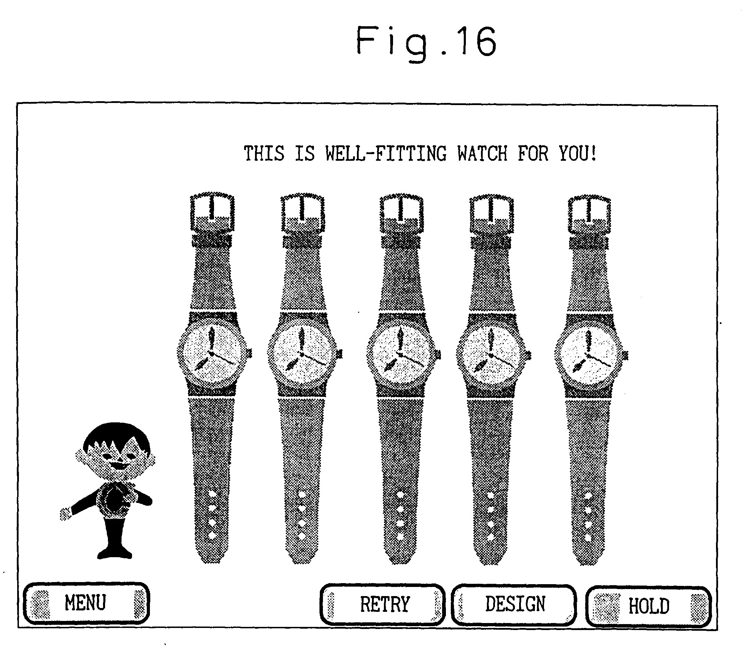

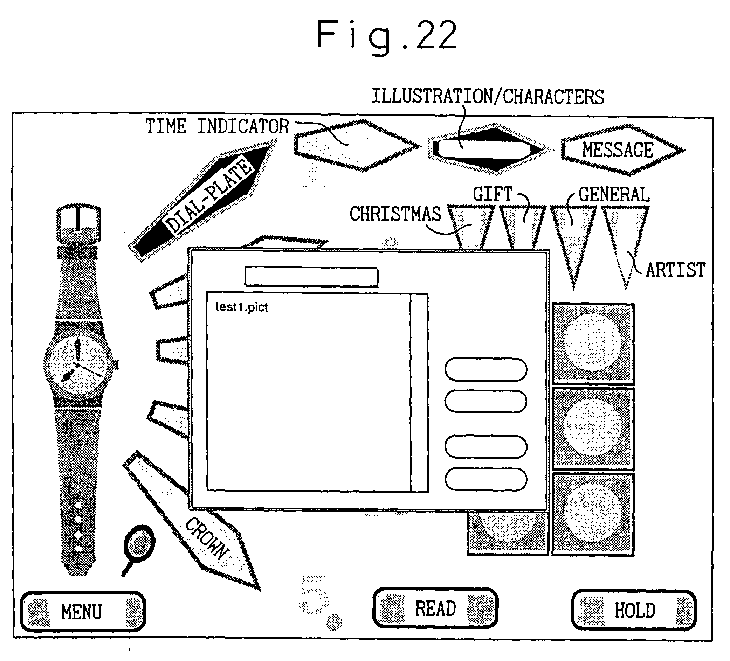

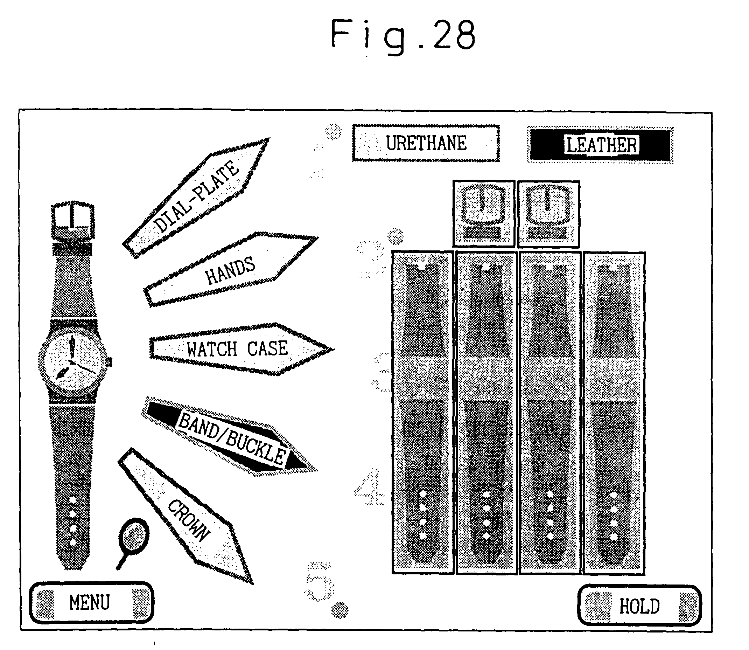

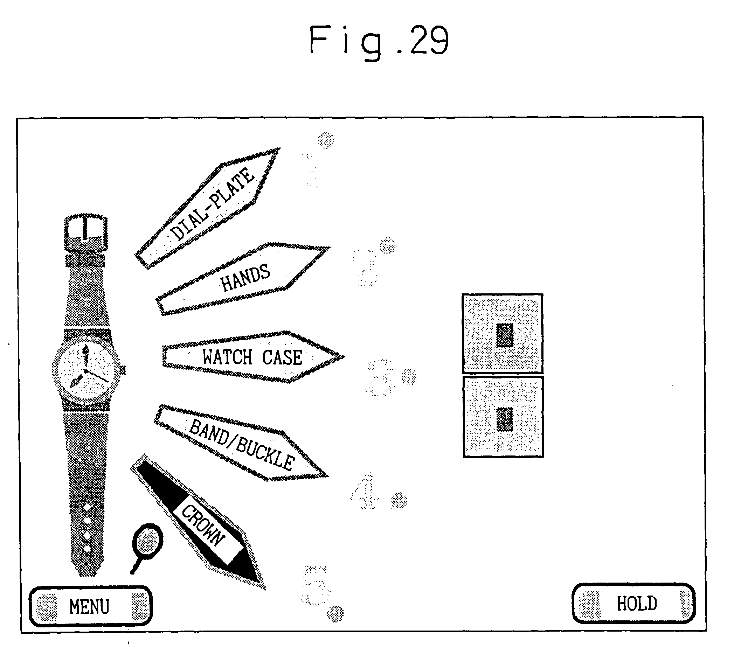

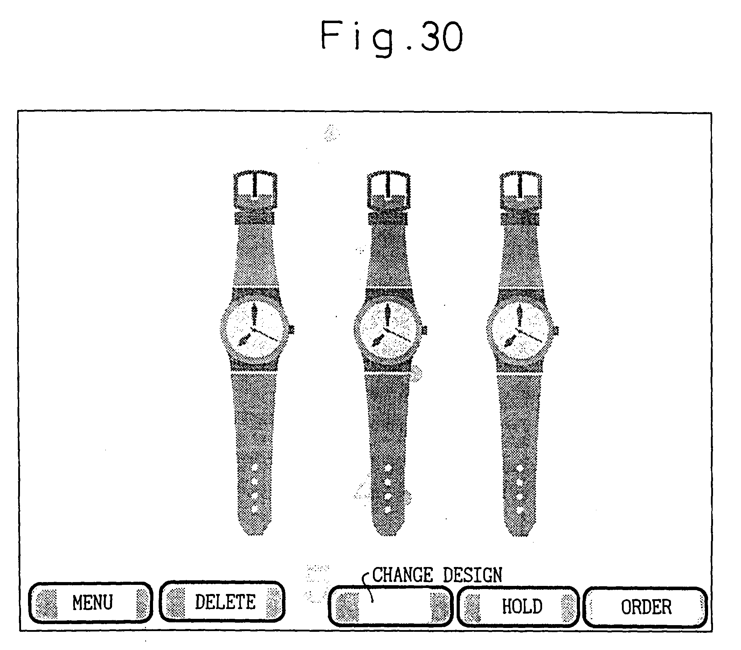

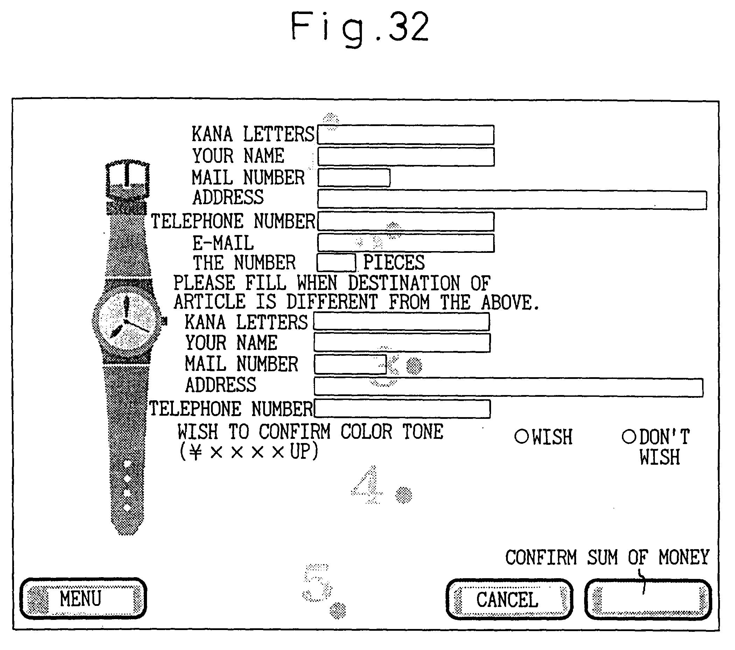

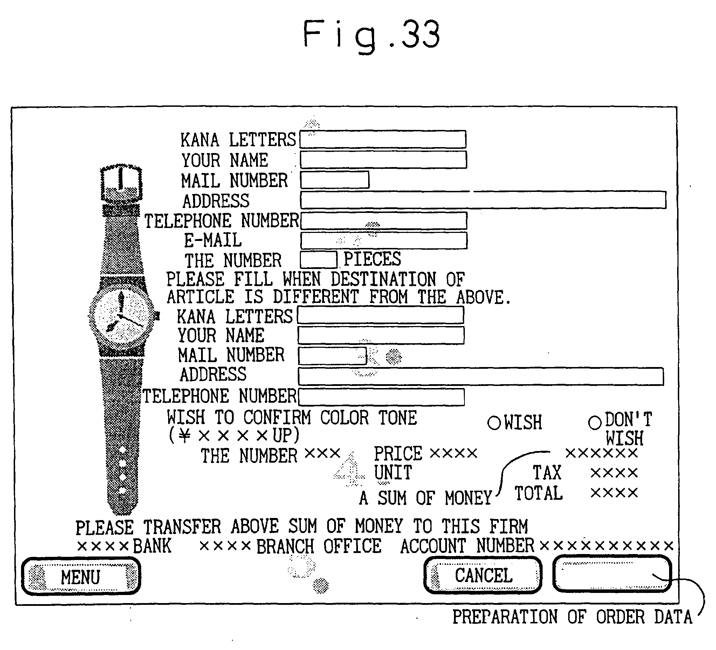

Next, the consumer selects the custom sample (step S23). That is, the consumer selects the dial-plate, hands, the watch case, the color, etc., to create the original watch in accordance with the following steps. That is, the consumer designs the original watch in the "TOKEI KOBOU" (see Figs. 16 to 29). Next, the watch created on the custom image is held (step S24). A maximum of three watches can be held in this embodiment (see Fig. 30). Conservation of the image is executed by clicking "HOLD". Further, an order data preparing image is displayed on the screen (Figs. 32 and 33).

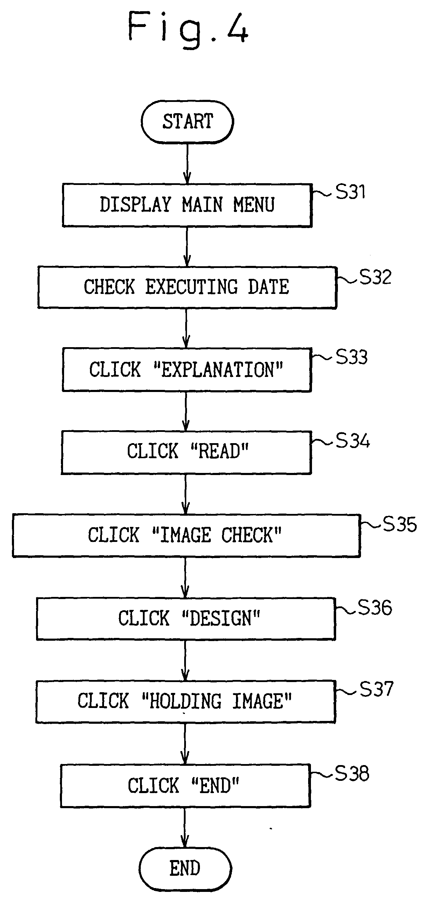

Figure 4 shows concrete steps of the main menu display in step S21 (see Fig. 14).

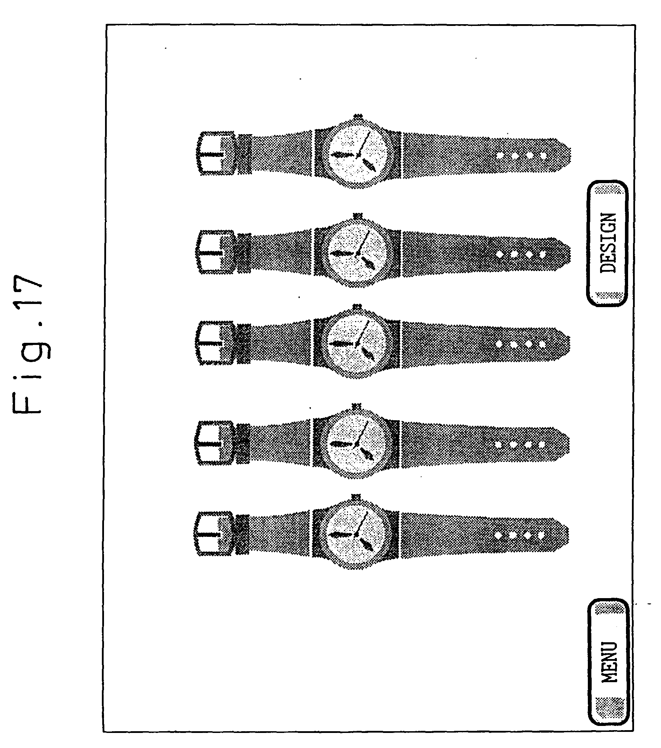

First, as the main menu, "EXPLANATION", "READ", "IMAGE CHECK", "DESIGN", "HOLD IMAGE" and "END" are displayed (step S31). Next, when "EXPLANATION" is clicked, the image is moved to the abstract of the present invention (step S33). Next, when "READ" is clicked, order data created by the consumer are read and the image is moved to the custom display (step S34). Next, "IMAGE CHECK" is clicked, the image is moved to the display of the image check (see Fig. 15 and step S35). Next, "DESIGN" is clicked, the image is moved to the display of the custom sample pattern representing the sample pattern (see Fig. 17 and step S36). Next, "HOLD IMAGE" is clicked, the image is moved to the display of the holding image (see Fig. 30 and step S37). Next, "END" is clicked, the current program is finished (step S38).

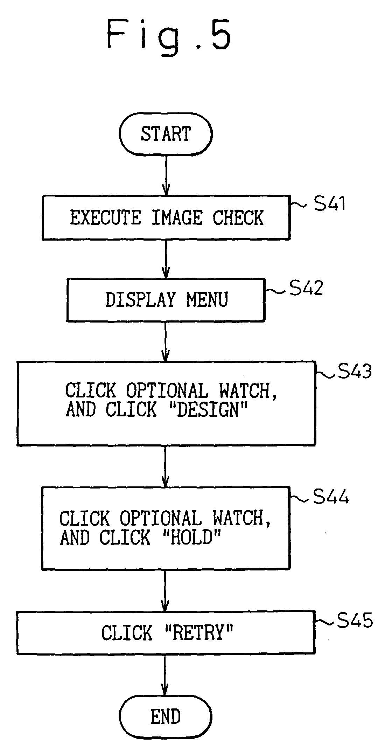

Figure 5 shows concrete steps of the image check in step S22 shown in Fig. 3.

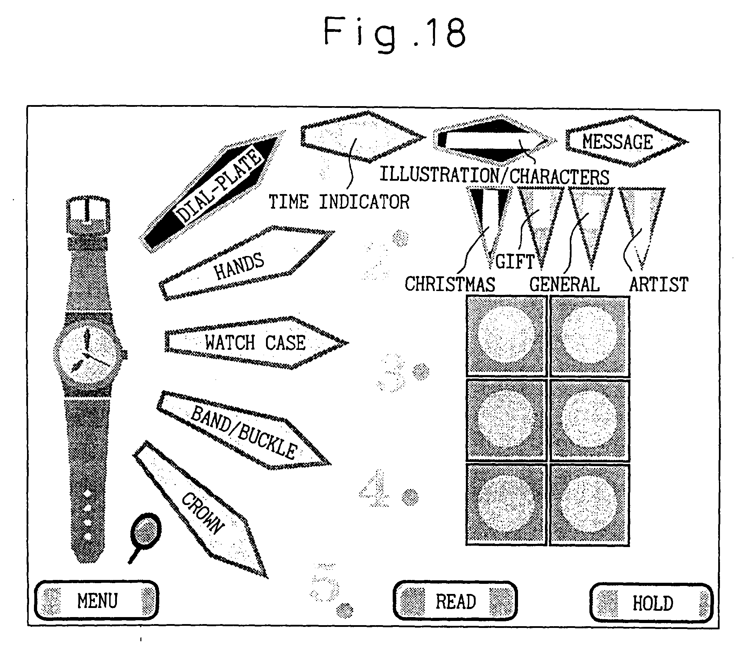

First, three questions are displayed in order to execute the image check. When all questions are answered, the result of the image check is displayed (see Fig. 16 and step S41). Next, the menu of "HOLD", "DESIGN" and "RETRY" are displayed, and, for example, the image of five watches is displayed (step S42). Next, when the image of an optional watch is clicked, and when "DESIGN" is clicked, the image is moved to the display of the custom selection (see Fig. 18 and step S43). Next, when the image of the optional watch is clicked, and when "IMAGE" is clicked, the image is moved to the holding image (see Fig. 30 and step S44). Next, when "RETRY" is clicked, the image is returned to the display of the image check, and the image check is retried (step S45).

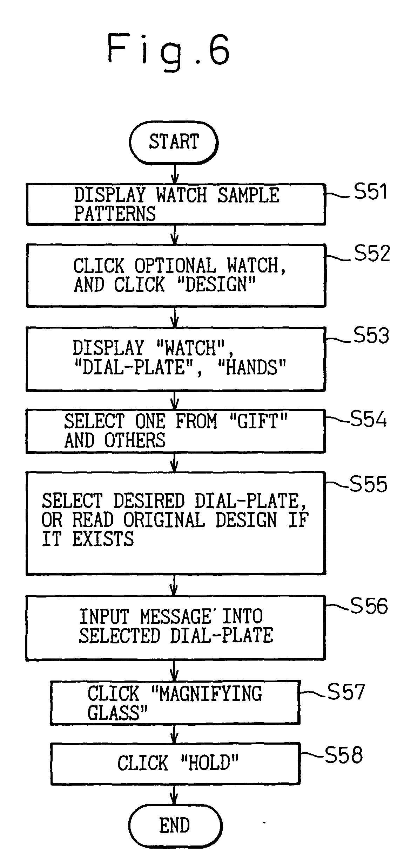

Figure 6 shows concrete steps of selection of the custom sample in step S23 shown in Fig. 3 (No. 1).

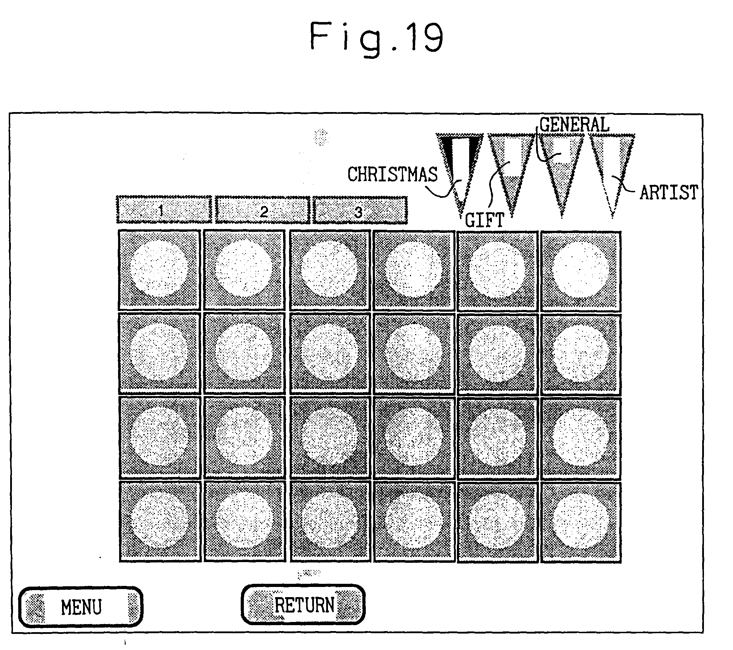

First, before sampling, five sample patterns of watches are displayed as the large group (see Fig. 17 and step S51). Next, when the image of the desired watch is clicked, and when "DESIGN" is clicked, the image is moved to the display of the custom selection (see Fig. 18 and step S52). Next, as shown in Fig. 18, as the small group, indication marks, such as, "WHOLE OF IMAGE", "DIAL-PLATE", "HANDS", "WATCH CASE", "BAND/BUCKLE", "CROWN", etc., are displayed. Further, "TIME INDICATOR", "ILLUSTRATION/CHARACTERS", "MESSAGE", "MAGNIFYING GLASS", etc., are displayed. Further, the sample of the constituent parts selected using the indication mark is displayed (step S53). Further, one of categories is selected from "CHRISTMAS", "GIFT", "GENERAL", etc., and the image is moved to the display (Fig. 19) in order to display a list of dial-plates sorted so as to fit his purpose (step S54).

Next, as shown in Fig. 18, when "DIAL-PLATE" was selected as the part, and when the desired dial-plate was selected from six samples of the sample dial-plate, the dial-plate in the whole of the image of the watch is replaced by the selected dial-plate. Similarly, other parts, such as the watch case, the band, etc., are selected by the indication mark so that the parts are displayed on the sample display section. As a result, these parts are replaced to the whole of the image of the watch so that it is possible to design the desired watch. Further, it is possible to revise each part, such as dial-plate, etc., any number of times, by confirming the whole of design coordinate. Further, it is possible to see the original design (step S55).

In this case, the "original design" means the parts digital information which are designed by the consumer himself. As the parts digital information, there are computer graphics created by the consumer, digital image taken by a digital camera by the consumer, and another digital image scanned by a scanner from an illustration which was drawn by the consumer, or a picture which was taken by the consumer. The clock maker arranges the original design to the surface of the dial-plate (i.e., time indicating side), bonds the printed original design to the surface, and provides the dial-plate as the original created by the customer himself and as the only one of its type in the world.

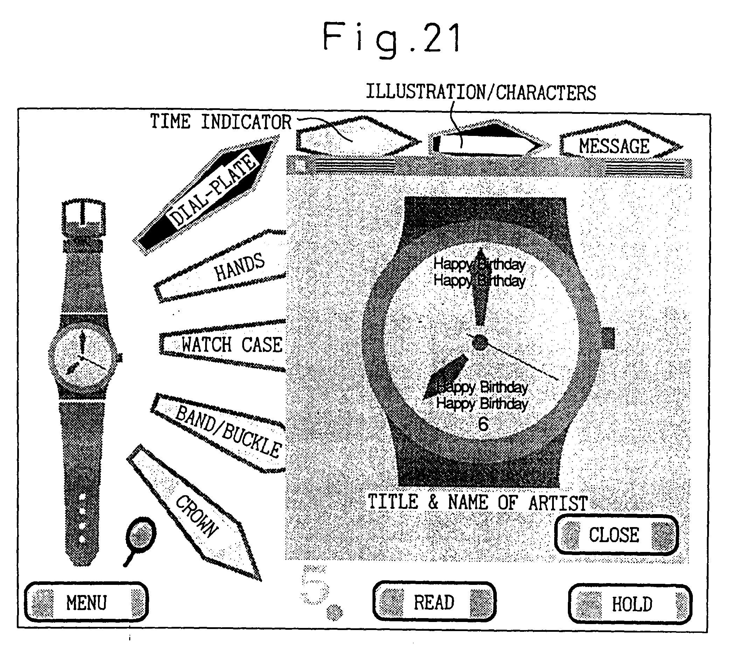

Next, the message is input to the selected dial-plate (step S56). The consumer can input optional words or sentences as the message. As shown in Fig. 21, for example, "Happy Birthday" can be input as the message. In this embodiment, it is possible to optionally arrange the message to four locations as shown in the drawing. In four locations, the customer can select the message to either any one favorite location or all locations. In this case, the number of messages is optional in four locations. Further, although the length of the message may be limited in accordance with the space, it is possible to optionally set the length to a predetermined extent. Further, it is possible to optionally use a font and color of characters in the predetermined extent.

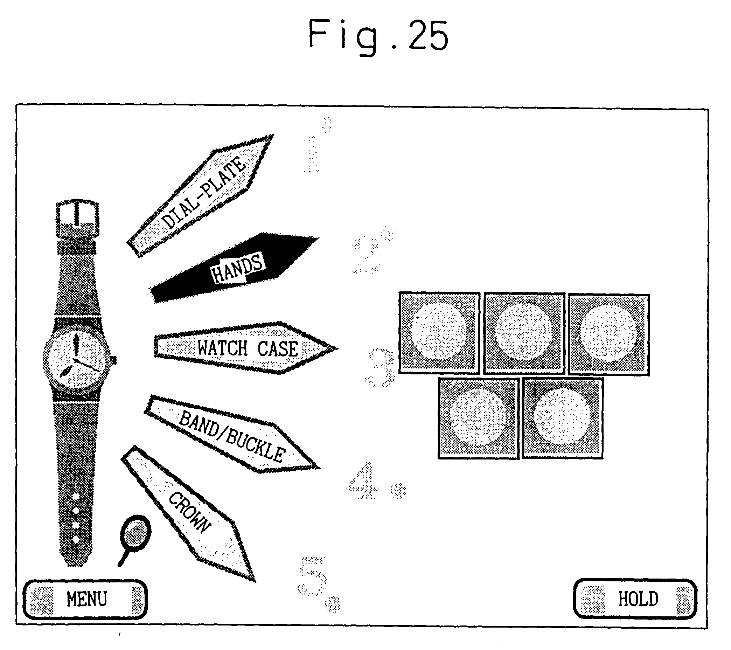

Next, when "MAGNIFYING GLASS" is clicked, the image of the dial-plate is enlarged (see Fig. 21 and step S57). In the case of Fig. 21, "ILLUSTRATION/CHAR ACTERS" is shown instead of "MESSAGE". Finally, "HOLD" is clicked, the image is moved to the holding of the image (Fig. 30) to hold the custom watch which is currently created (step S58). Further, "READ" is clicked, the dial-plate created by the consumer is read out from the file, and it is displayed on a vacant space within six spaces (see Fig. 25).

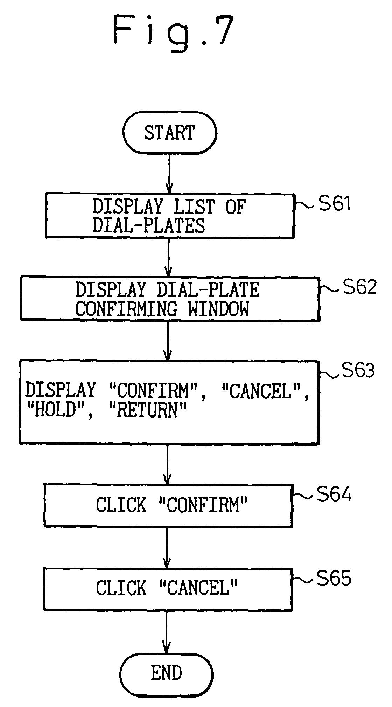

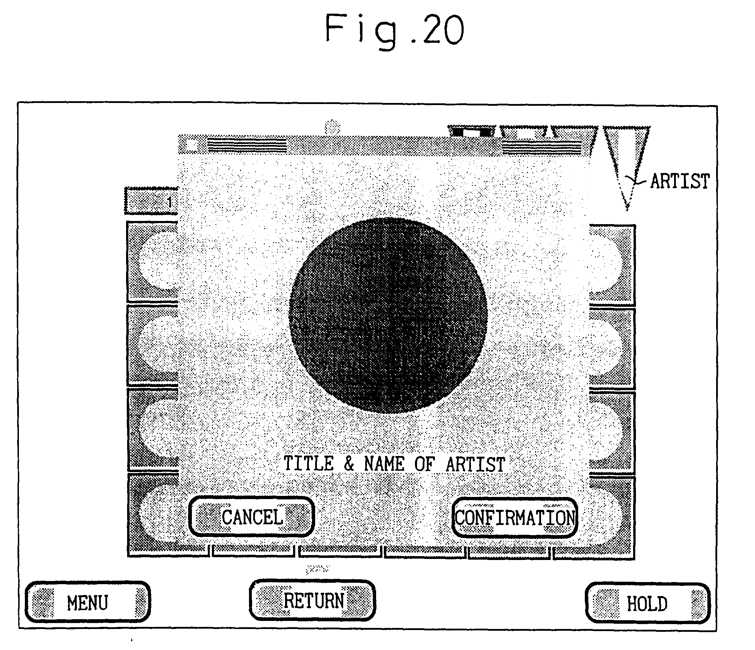

Figure 7 shows concrete steps of selection of the custom sample in step S23 shown in Fig. 3 (No. 2). First, a list of dial-plates is displayed (step S61). In this case, it is possible to display twenty-four dial-plates, at a maximum, within one screen. The consumer selects one favorite dial-plate from twenty-four dial-plates, and the selected dial-plate is enlarged (see Fig. 20). When "CONFIRM" is clicked on the enlarged image, the image is returned to Fig. 18, the dial-plate is displayed on six spaces. Further, a title and a name of artist are displayed on the enlarged window.

Next, the window for confirming the dial-plate is displayed (see Fig. 20 and step S62). Further, "CONFIRM", "CANCEL", "HOLD" and "RETURN" are displayed (step S63). When "CONFIRM" is clicked, Figure 18 is displayed and the selected dial-plate is displayed on the vacant space. When "CANCEL" is clicked, the confirmation window is closed (step S65), and Figure 19 is displayed.

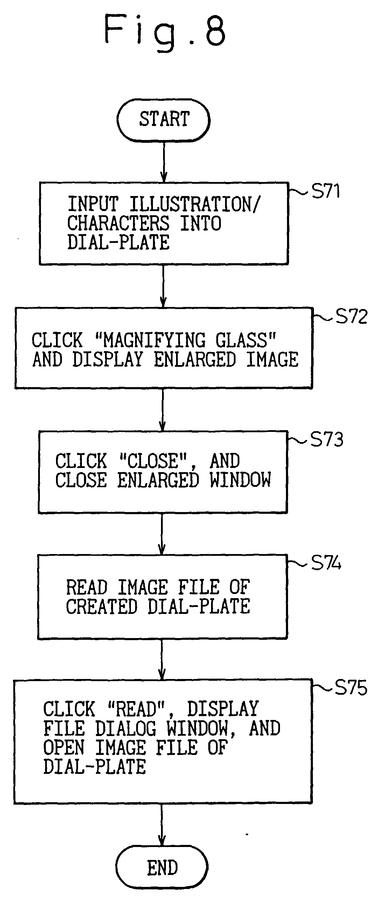

Figure 8 shows concrete steps of selection of the custom sample in step S23 shown in Fig. 3 (No. 3). First, when the illustration/characters, (for example, "Happy Birthday") is input (step S71). Next, when "MAGNIFYING GLASS" is clicked, the case, the time indicator, hands, the dial-plate, the crown, the message, etc., are enlarged and displayed (step S72). Next, an image file of the created dial-plate is read (step S74).

Next, when "READ" is clicked, a file dialog window is displayed and the image file of the dial-plate is opened (step S75). The image is displayed on the right eight spaces. In this case, the flowchart for design samples besides dial-plate, time indicator, hands, watch case, band, crown, etc., are omitted and only the explanation is given on the display below.

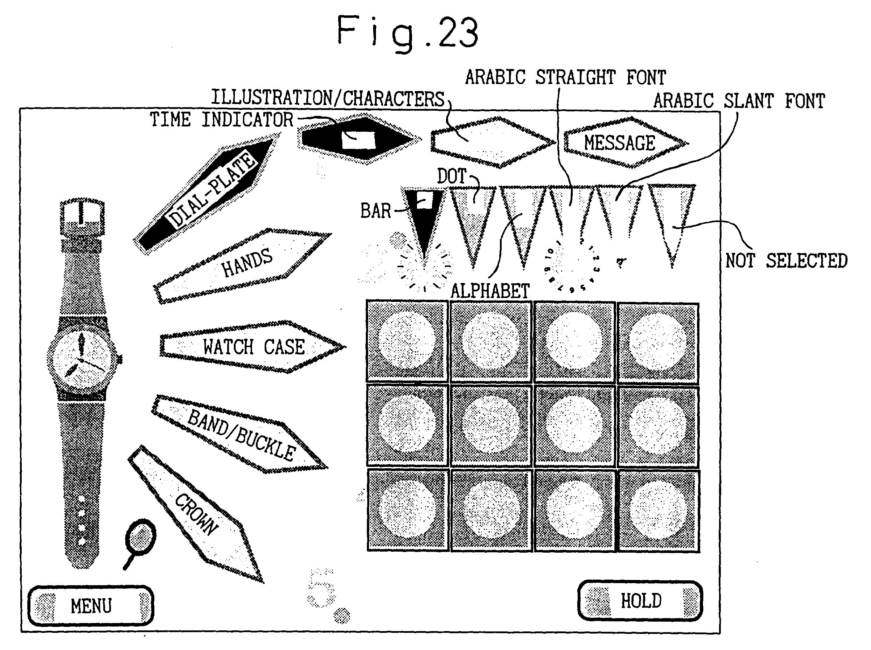

First, selection of dial characters is explained in Fig. 23. First, "TIME INDICATOR" is clicked, and changeable time indicators are displayed. When a bar, a dot, an alphabet, etc., is clicked, twelve time indicators which are indicated by different colors are displayed on the screen, and one of time indicators is selected. Then, the image is changed to the selected time indicator. Further, "HOLD" is clicked, the image is moved to the holding image of the custom watch which is created currently.

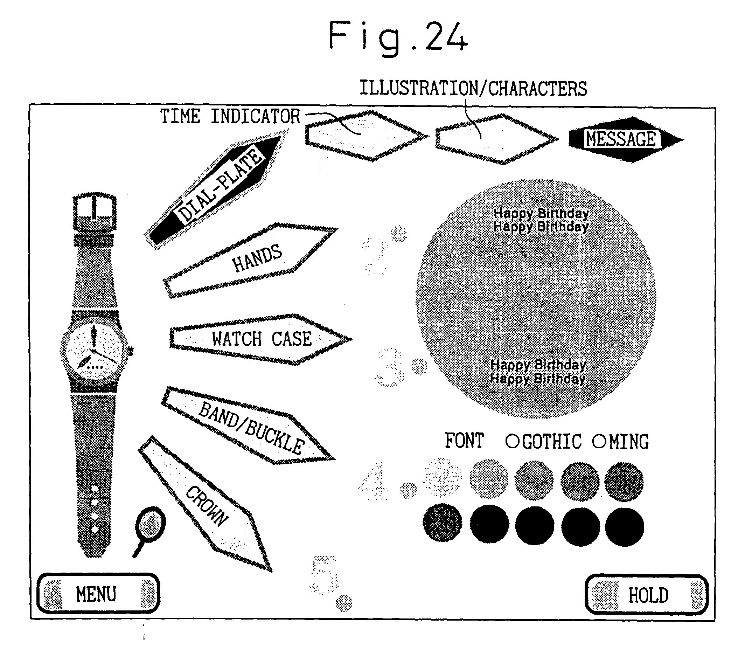

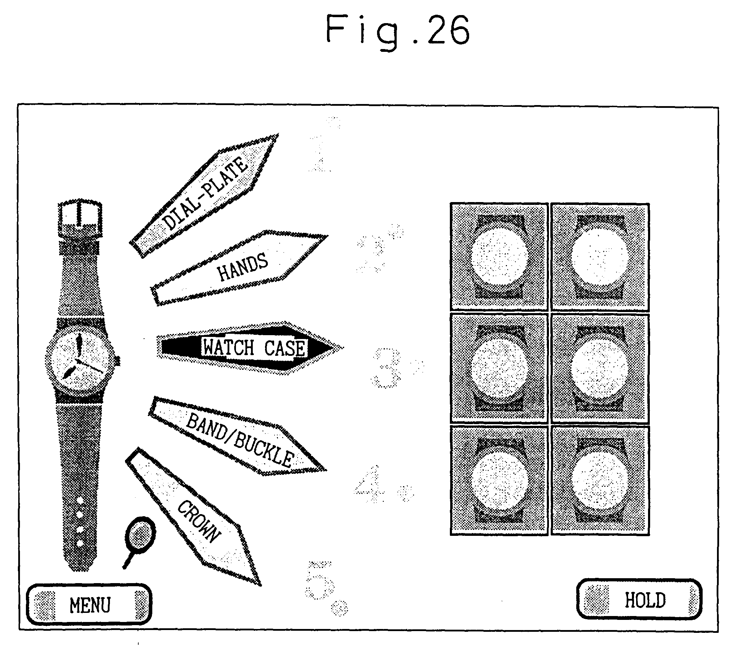

Next, the input of the message is explained below (see Fig. 24). First, a favorite font (for example, Gothic font, Ming font, etc.,) is selected from different fonts. The color of character is selected from ten colors displayed on the right side. When "HANDS" is clicked, one hand is selected from five kinds of hands. When "HOLD" is clicked, the image is moved to the holding image. Next, the case is selected as shown in Fig. 26. When "WATCH CASE" is clicked, changeable watch cases are displayed, and the desired watch case is selected therefrom. When the desired watch case is selected, the color of the watch case of the watch is changed. When "HOLD" is clicked, the image is moved to the holding image.

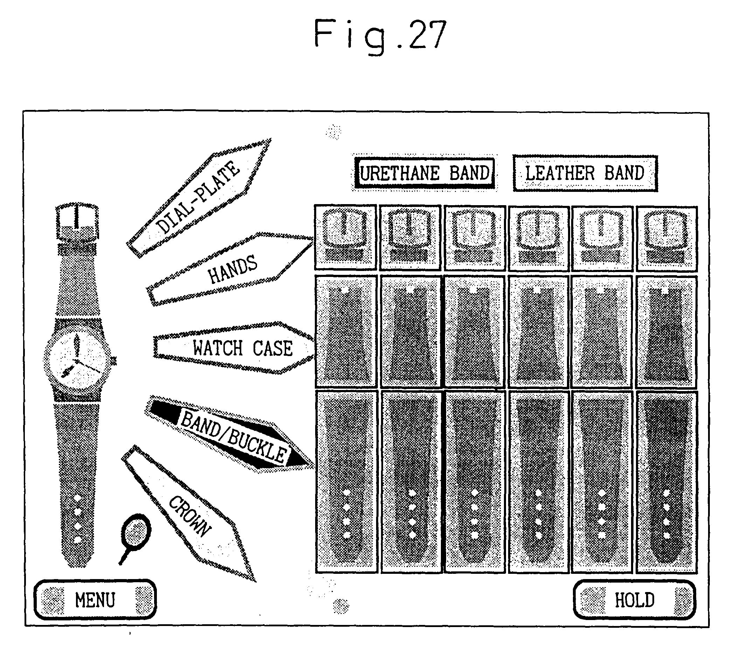

As shown in Figs. 27, 28 and 29, the band, the buckle, the crown, etc., are selected based on the steps similar to the above.

In this case, as shown in step S4' in Fig. 1 and in step S14' in Fig. 2, for example, it is possible to select the constituent material of the watch case when selecting the watch case. That is, it is possible to select either the watch case made of resin, such as plastics, or the watch case made of metal.

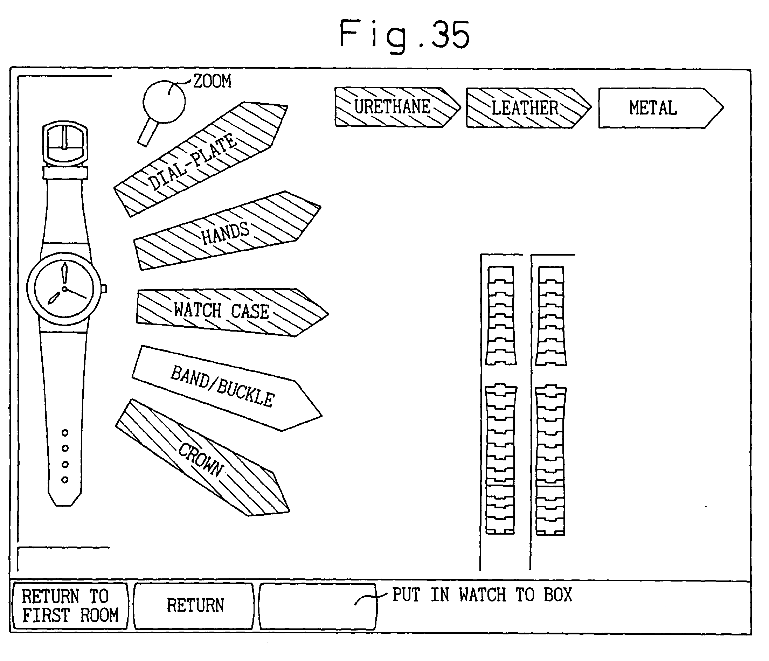

Further, as shown in Fig. 35, it is possible to select the constituent material of the watch band when selecting the watch band. That is, it is possible to select the watch band having favorite material from the group of band made of urethane foam, leather, or metal. The metal band is selected in Fig. 35. When "BAND/BUCKLE", which is indicated to the left side of the display, is selected, "METAL" is selected on the right upper side. In Fig. 35, two kinds of metal bands are shown in different colors.

Further, when the watch case or watch band is selected, it is possible to read the original design (i.e., parts digital information) created by the consumer himself. The clock maker arranges the original design to, for example, the front surface of the band, and provides it to the customer as the custer's originally-designed band and as the only one of its kind in the world. When the material of the band is made of resin, such as urethane foam, an original design is printed. The watch case is also printed.

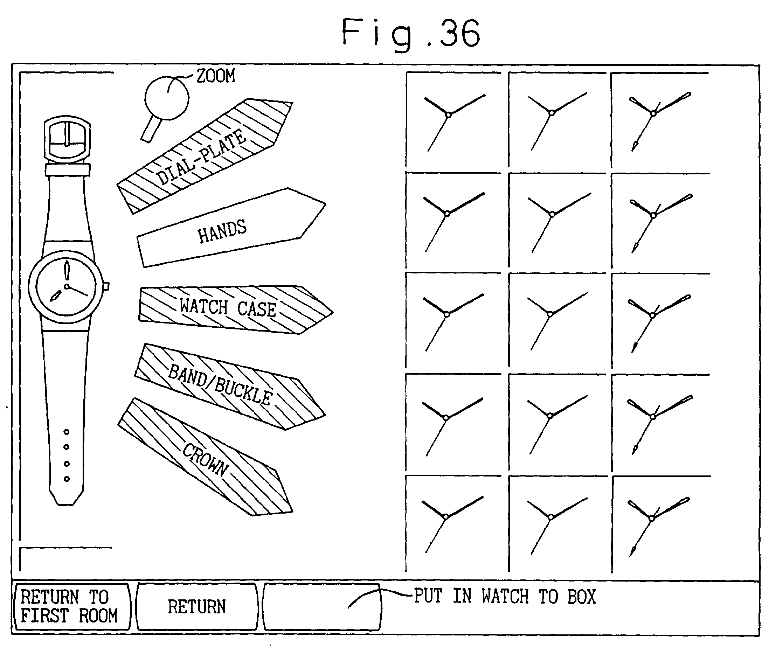

As shown in Fig. 36, it is possible to select whether the function to light up the hands as additional function is added or not. That is, the light-up function is desired, it is possible to select the hands having luminous material, for example, fluorescent material or noctilucent coating. The noctilucent material is provided to, for example, a tip of the hand as shown in the right upper portion of the drawing.

Further, for example, several kinds of modules are provided to drive the hands, and it may be possible to optionally select the favorite hands, by the consumer. As a result, the consumer can select the counting function which is one of functions provided in the article. Further, it is possible to select a module for measuring external environment, for example, a module having the pressure measuring function by a pressure sensor, and a module having the temperature measuring function by a temperature sensor.

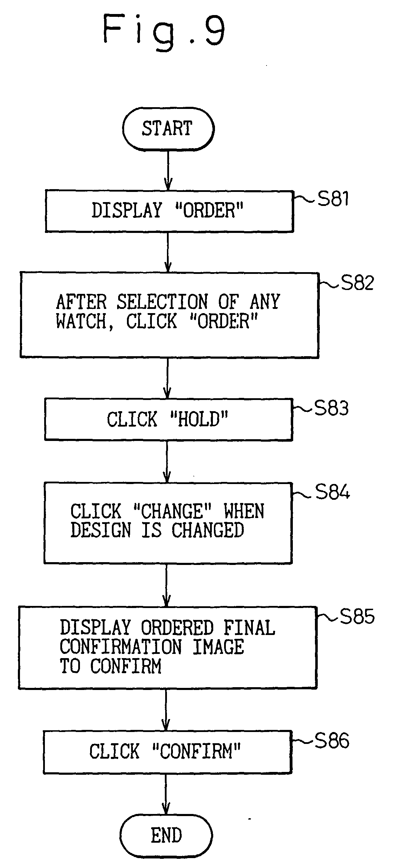

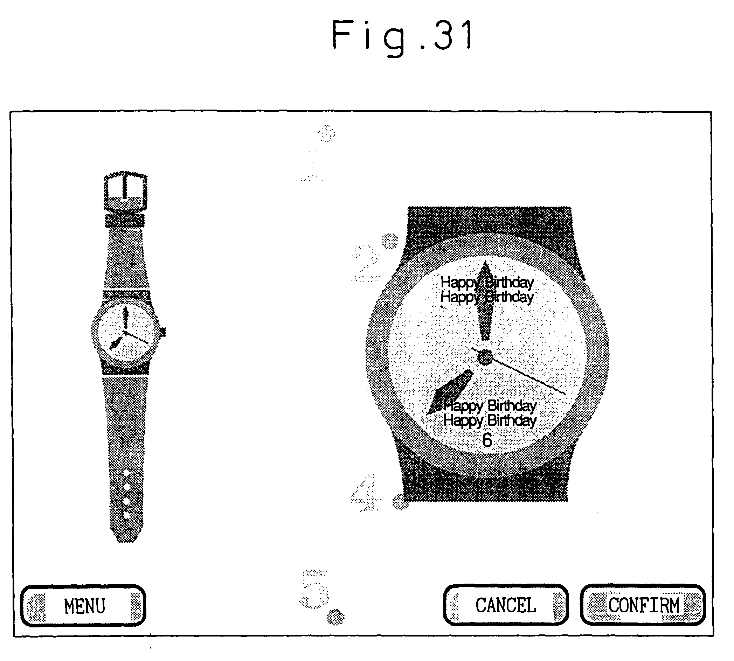

Figure 9 shows concrete steps of display of the holding image in step S24 shown in Fig. 3. First, as shown in Fig. 30, the holding image is displayed, and "ORDER", "HOLD", "CHANGE OF DESIGN", "DELETE', etc., are displayed (step S81). Any one of watches is selected when the customer orders next, and "ORDER" is clicked (see Fig. 31, step S82). Further, when the image is held, any one of watch is selected and "HOLD" is clicked (see Fig. 31 and step S83). Next, when the design is changed after selection of optional watch, "CHANGE" is clicked (step S84). Further, the image is moved to the custom image so as to change the design coordinate. When "DELETE" is clicked, the selected watch is erased. As shown in Fig. 31, the final confirmation image is displayed in order to confirm the ordered watch (step S85). Further, "CONFIRM" is clicked (step S86), and the display is moved to Figure 32. When "CANCEL" is clicked, the display is moved to three holding image (see Fig. 30).

Figure 10 is a flowchart for confirming color tone. First, the clock maker asks the consumer whether confirmation of color tone is necessary or not (see Figs. 30 and 33). The consumer requests the confirmation of the color tone from the clock maker (step S92). The clock maker prints some samples which some sample colors are combined with peripheral color tones in accordance with the request, and sends them to the consumer (step S93).

The consumer selects either the sample color or a color close thereto in accordance with the sample information, and returns them to the clock maker (step S94). The clock maker produces the dial-plate based on the color selected by the consumer in accordance with the answer of the consumer (step S95).

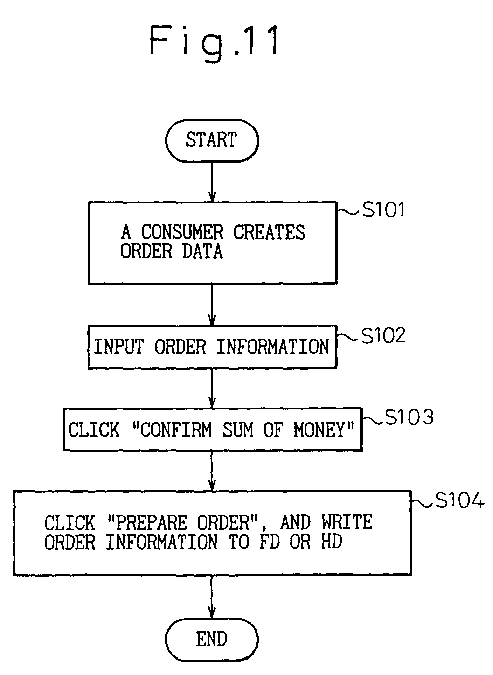

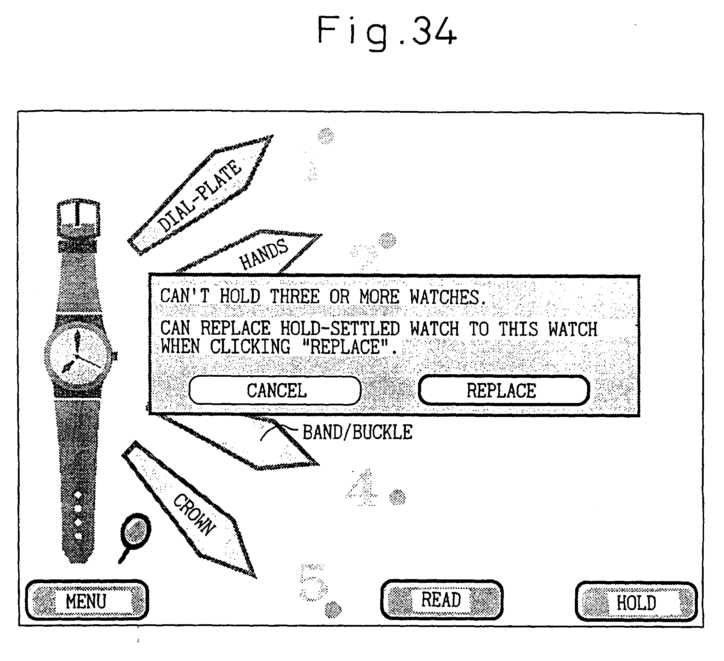

Figure 11 shows concrete steps of preparation of order data in step S25 shown in Fig. 3. First, the consumer prepares the order data (step S101). Next, the order information is input to a predetermined vacant column on the display (step S102). Next, "CONFIRM SUM OF MONEY" is clicked (step S103), Figure 33 is displayed. Further, "PREPARE ORDER" is clicked, and the order information is recorded on a harddisk or a floppy disk (step S104). In this case, Figure 34 is in the case that three watches were already held and the fourth watch is added. When the fourth watch is held, the watch which was already held is replaced to the fourth watch.

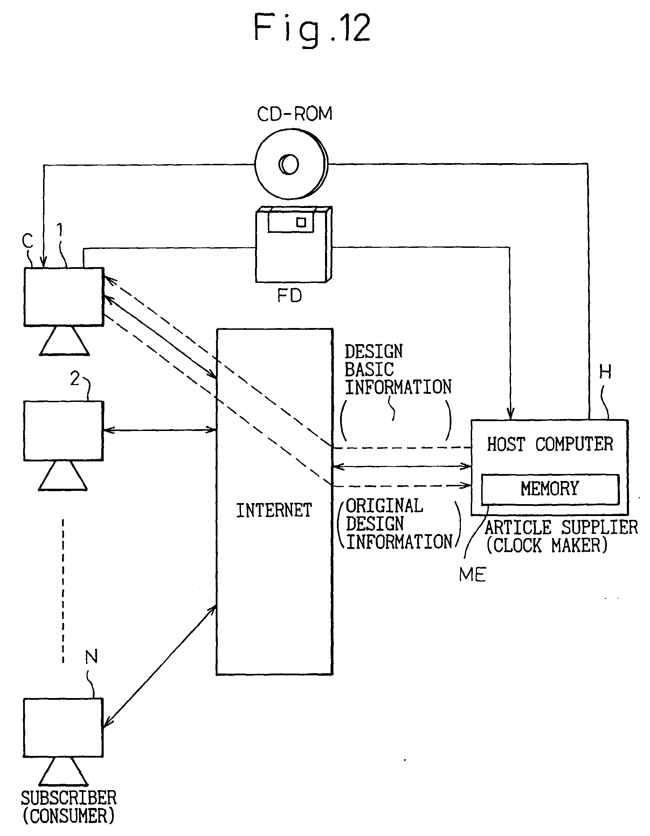

Figure 12 is a structural view of a system according to the present invention. The internet is utilized as the information communication network. In subscribers (1 to N) as consumers, for example, when the consumer 1 accesses a host computer H provided in the clock maker which is an article supplier through the internet, a CD-ROM is provided from the clock maker to the consumer 1. The consumer 1 creates the original design watch in accordance with the above-mentioned steps, records the originally-design watch into the floppy disk (FD) and sends it to the clock maker. The clock maker produces the original watch and sends the finished watch to the consumer. In the drawing, ME represents an internal memory provided in the host computer, but it may be possible to utilize an external memory. A control program is stored in the memory.

In Fig. 12, as shown by dotted line, the clock maker can provide the design software (or the design basic information based on the design software) having the same contents as the CD-ROM instead of the CD-ROM by utilizing the internet, or another way, to the consumer. Further, it is possible to send the original design information from the consumer to the clock maker by utilizing the internet without use of the floppy disk.

Figure 13 is an explanatory view for explaining contents of storage medium used in the present invention. The storage medium is provided from the clock to the consumer, and the CD-ROM shown in Fig. 12 corresponds to this drawing. The reference number 2 represents parts digital information. As the parts digital information, the dial-plate information, the pointers information, the watch case information, the color information, the wrist band information, the buckle information, the time indicator information, the order information, the message information, etc., are recorded in the CD-ROM. The reference number 1 represents another control program necessary for parts selection.

Concretely, this storage medium stores a program to execute the following processes to the computer, i.e., a process for providing parts digital information indicating watch constituent parts; a process for selecting parts digital information corresponding to the watch design desired by the consumer from the parts digital information; and a process for recording parts digital information selected by the consumer to the predetermined storage medium. Further, the storage medium stores an order information to order from the consumer.

### CAPABILITY OF UTILIZATION IN INDUSTRY

As explained above, according to the present invention, an article design, for example, in the watch design creation, the consumer can create the specification of his own original watch by communicating with a substitute of the clock maker, i.e., parts design information and design software. Further, by communicating between the clock maker and the consumer through the predetermined information communication means, it is possible to perfectly reflect the constituent parts (for example, the dial-plate) originally designed by the consumer on the watch. Further, in the present invention, by displaying a plurality of completed wrist watches on the same screen, the consumer can easily compare a plurality of wrist watches created by the consumer himself, and can evaluates them. Accordingly, if evaluation by himself is low, the consumer again creates the watch.

Still further, if the consumer requests, he can check situation of creation of the article so that the consumer can wait for delivery of the watch without any problems. Accordingly, it is possible to establish an order-sale system in which the consumer can order without any problems. Therefore, it is possible to realize large capability of utilization in industry.

### A LIST OF REFERENCE CODES

- 1:: PARTS SELECTION CONTROL PROGRAM
- 2:: PARTS DESIGN INFORMATION
- C:: CONSUMER
- FD:: FLOPPY DISK
- M:: CLOCK MAKER
- H:: HOST COMPUTER
- ME:: MEMORY

## Claims

1. An article design creating system comprising:
means for providing parts digital information indicating article constituent parts which can be provided from an article supplier to a consumer and design software for combining the parts digital information through information communication means;
means for receiving article original design information which was created by the consumer by combining the parts digital information, using the design software and the parts digital information which were provided from the consumer to the article supplier; and
means for producing an article based on the original design information provided from the consumer to the article supplier.

2. An article design creating system as claimed in claim 1, further comprising means for providing a design basic information based on the design software from the article supplier to the consumer.

3. An article design creating method comprising:
a process for providing parts digital information indicating article constituent parts which can be provided from an article supplier to a consumer, and design software for combining the parts digital information through information communication means;
a process for receiving article original design information which was created by the consumer by combining the parts digital information, using the design software and the part digital information which were provided from the consumer to the article supplier; and
a process for producing an article based on the original design information provided from the consumer to the article supplier.

4. An article design creating method as claimed in claim 3, further comprising a process for providing design basic information based on the design software from the article supplier to the consumer.

5. An article design creating method as claimed in claim 3, further comprising a process for selecting materials of the article constituent parts when the consumer creates the article original design information.

6. An article design creating method as claimed in claim 3, further comprising a process for selecting additional functions added to the article constituent parts when the consumer creates the article original design information.

7. An article design creating method as claimed in claim 3, further comprising a process for selecting functions provided to the article when the consumer creates the article original design information.

8. An article design creating method as claimed in claim 3, further comprising a process for checking situation of production at the article supplier by the consumer who requested production of the article, through the information communication means.

9. An article design creating method as claimed in claim 8, further comprising a process for acquiring situation of production of the article stored in a computer of the article supplier by executing access to the computer from the consumer.

10. A checking method for enabling check of situation of production of the article which was ordered by the consumer through the information communication network.

11. An article design creating method as claimed in claim 10, further comprising a process for acquiring situation of production of the article stored in the computer of the article supplier by executing access to the computer from the consumer.

12. A computer readable storage medium storing a program to execute the following processes which include:
a process for providing parts digital information indicating article constituent parts which can be provided from an article supplier to a consumer, and design software for combining the parts digital information through information communication means;
a process for receiving an article original design information which was created by the consumer by combining the parts digital information, using the design software and the part digital information which were provided from the consumer to the article supplier; and
a process for producing an article based on the original design information provided from the consumer to the article supplier.

13. A computer readable storage medium as claimed in claim 12, further comprising a process for providing a design basic information based on the design software from the article supplier to the consumer.

14. A computer readable storage medium storing a program to execute the following processes which include:
a process for providing parts digital information which indicates article constituent parts for creating article design to a consumer;
a process for selecting the parts digital information which corresponds to the article design desired by the consumer from the parts digital information provided by the consumer; and
a process for recording the parts digital information selected by the consumer to a predetermined storage medium.

15. A computer readable storage medium further recording order information ordered by the consumer.

16. A watch design creating system comprising:
means for sending creation service for watch design information from a clock maker to a consumer through an information communication means;
means for receiving design software for the watch design and parts digital information indicating watch constituent parts, these being requested from the consumer to the clock maker through a predetermined communication means;
means for providing parts digital information which can be provided from the clock maker to the consumer, and design software for combining the parts digital information through the information communication means;
means for receiving watch original design information which was created by the consumer by combining the parts digital information, using the design software and the part digital information which were provided from the consumer to the watch maker;
means for accepting production of the watch requested from the consumer to the clock maker, based on the original design information created by the consumer; and
means for producing the watch based on the original design information provided from the consumer to the clock maker, and providing a completed watch to the consumer.

17. A watch design creating system as claimed in claim 16, further comprising means for providing the design basic information based on the design software from the clock maker to the consumer.

18. A watch design creating system comprising:
means for sending creation service for watch design information from a clock maker to a consumer through an information communication means;
means for receiving design software for the watch design and parts digital information indicating watch constituent parts, these being requested from the consumer to the clock maker through a predetermined communication means;
means for providing a storage medium for storing parts digital information which can be provided from the clock maker to the consumer, and design software for combining the parts digital information;
means for receiving watch original design information which was created by the consumer by setting the storage medium in his own personal computer and by combining the parts digital information, using the design software stored in the storage medium and the part digital information which were independently created by the consumer himselef;
means for accepting production of the watch requested from the consumer to the clock maker, by recording the original design information created by the consumer into the storage medium and by sending the storage medium; and
means for producing the watch based on the original design information which was recorded on the predetermined storage medium sent from the consumer to the clock maker, and providing a completed watch to the consumer.

19. A watch design creating system as claimed in claim 16 or 19, wherein the information communication means is an information communication network.

20. A watch design creating system as claimed in claim 19, wherein the information communication network is the internet.

21. A watch design creating system as claimed in claim 16 or 18, further comprising means for combining the parts digital information which were independently created by the consumer when creating the original design information.

22. A watch design creating method comprising:
a process for sending creation service for watch design information from a clock maker to a consumer through an information communication means;
a process for receiving design software for the watch design and parts digital information indicating watch constituent parts, these being requested from the consumer to the clock maker through a predetermined communication means;
a process for providing the parts digital information which can be provided from the clock maker to the consumer, and design software for combining the parts digital information through the information communication means;
a process for receiving watch original design information which was created by the consumer by combining the parts digital information, using the design software and the part digital information;
a process for accepting production of the watch requested from the consumer to the clock maker, based on the original design information created by the consumer; and
a process for producing the watch based on the original design information which was received from the consumer, and providing a completed watch to the consumer.

23. A watch design creating method as claimed in claim 22, further comprising a process for providing the design basic information based on the design software from the clock maker to the consumer.

24. A watch design creating method comprising:
a process for sending creation service for watch design information from a clock maker to a consumer through an information communication means;
a process for receiving design software for the watch design and parts digital information indicating watch constituent parts, these being requested from the consumer to the clock maker through a predetermined communication means;
a process for providing a storage medium storing parts digital information which can be provided from the clock maker to the consumer, and design software for combining the parts digital information through the information communication means;
a process for receiving watch original design information which was created by the consumer by setting the storage medium in his own personal computer and by combining the parts digital information, using the design software stored on the storage medium and the part digital information which were independently created by the consumer himself;
a process for accepting production of the watch requested from the consumer to the clock maker, by recording the original design information created by the consumer on the storage medium and by sending the storage medium; and
a process for producing the watch based on the original design information which was recorded into the predetermined storage medium sent from the consumer to the clock maker, and providing a completed watch to the consumer.

25. A watch design creating method as claimed in claim 22 or 24, further comprising a process for combining the parts original information which were independently created by the consumer when creating the original design information.

26. A watch design creating method as claimed in claim 22 or 24, further comprising a process for selecting materials of the watch constituent parts by the consumer when creating the watch original design information.

27. A watch design creating method as claimed in claim 22 or 24, further comprising a process for selecting additional functions added to the watch constituent parts by the consumer when creating the watch original design information.

28. A watch design creating method as claimed in claim 22 or 24, further comprising a process for selecting functions provided to the watch by the consumer when creating the watch original design information.

29. A watch design creating method as claimed in claim 22 or 24, further comprising a process for checking situation of production at the clock maker through the information communication network.

30. A watch design creating method as claimed in claim 22 or 24, further comprising a process for confirming color tone designated by the consumer and actual color tone in the completed watch in accordance with confirmation request from the consumer.

31. A watch design creating method as claimed in claim 22 or 24, further comprising a process for displaying in layers, a completed figure, pattern groups of watch constituent parts, and designation of parts, on the screen, when creating the original design information by the consumer.

32. A watch design creating method as claimed in claim 31, wherein the watch constituent parts are sequentially and selectively displayed on the screen from large group to small group when the consumer creates the original design information.

33. A watch design creating method as claimed in claim 31, wherein an enlarged view of the completed watch is displayed on the screen when the consumer creates the original design information.

34. A watch design creating method as claimed in claim 30, wherein the clock maker receives colors designated by the consumer, prints a plurality of colors close to the designated colors at the same time, and provides printed documents for confirmation of the color to the consumer.

35. A watch design creating method as claimed in claim 31, wherein a plurality of completed watches are displayed on the same screen to be compared with one another when the consumer creates the original design information.

36. A watch design creating method as claimed in claim 22 or 24, wherein at least one message is input to a dial-plate on the screen through a keyboard when the consumer creates the original design information.

37. A watch design creating method as claimed in claim 36, wherein, location, number, length, font and color, of the message are designated on the dial-plate on the screen when the consumer creates the original design information.

38. A watch design creating method as claimed in claim 22 or 24, wherein a plurality of sample patterns are displayed on the same display when the consumer creates the original design information.

39. A computer readable storage medium storing a program to execute the following processes which include:
a process for sending creation service for watch design information from a clock maker to a consumer through an information communication means;
a process for receiving design software for the watch design and parts digital information indicating watch constituent parts, and these being requested from the consumer to the clock maker through a predetermined communication means;
a process for providing the parts digital information which can be provided from the clock maker to the consumer, and design software for combining the parts digital information through the information communication means;
a process for receiving a watch original design information which was created by the consumer by combining the parts digital information, using the design software and the part digital information;
a process for accepting production of the watch requested from the consumer by the clock maker, based on the original design information created by the consumer; and
a process for producing the watch based on the original design information which was received from the consumer, and providing a completed watch to the consumer.

40. A computer readable storage medium as claimed in claim 39, further comprising a process for providing the design basic information based on the design software from the clock maker to the consumer.

41. A computer readable storage medium storing a program to execute the following processes which include:
a process for sending creation service for watch design information from a clock maker to a consumer through information communication means;
a process for receiving design software for the watch design and parts digital information indicating watch constituent parts, and these being requested from the consumer to the clock maker through a predetermined communication means;
a process for providing a storage medium storing parts digital information which can be provided from the clock maker to the consumer, and design software for combining the parts digital information;
a process for receiving a watch original design information which was created by the consumer by setting the storage medium into his own personal computer and by combining the parts digital information, using the design software stored on the storage medium and the part digital information which were independently created by the consumer himselef;
a process for accepting production of the watch requested from the consumer to the clock maker, by recording the original design information created by the consumer on the storage medium and by sending the storage medium; and
a process for producing the watch based on the original design information which were recorded on the predetermined storage medium sent from the consumer to the clock maker, and providing a completed watch to the consumer.

42. A computer readable storage medium storing a program to execute the following processes which include:
a process for providing the parts digital information which indicates the watch constituent parts for creating the watch design to the consumer;
a process for selecting the parts digital information which corresponds to the watch design desired by the consumer from the parts digital information provided by the consumer; and
a process for recording the parts digital information selected by the consumer onto a predetermined storage medium.

43. A computer readable storage medium as claimed in claim 42, wherein, at least, dial-plate information, hands information, watch case information, color information, watch band information, buckle information, time indicator information, and message information, are recorded as the parts digital information.

44. A computer readable storage medium as claimed in claim 42, wherein, an order information for ordering from the consumer is recorded as the parts digital information.
